# EUROPEAN PATENT SPECIFICATION

(11) **EP 3 732 387 B1**
(45) Date of publication and mention of the grant of the patent: **07.06.2023**
(21) Application number: 18849405.8
(22) Date of filing: 31.12.2018
(51) Int. Cl.: F16L 21/00, F16L 21/08

(54) **RESTRAINING PIPE COUPLING**
EINSCHRÄNKENDE SCHLAUCHKUPPLUNG
RACCORD DE TUYAUX DE RETENUE

(30) Priority: 31.12.2017 PT 2017110480
(43) Date of publication of application: 04.11.2020
(73) Proprietor: FUCOLI-SOMEPAL FUNDIÇÃO DE FERRO, S.A., 3001-906 Coimbra (PT)
(72) Inventor: MIMOSO LEMOS, Carlos Manuel, 3050-903 Coimbra (PT)
(74) Representative: Patentree
(86) International application number: PCT/IB2018/060733
(87) International publication number: WO 2019/130279

(56) References cited:
- WO-A1-2008/010030
- CN-Y- 201 335 191
- US-A- 4 417 755
- US-A- 5 340 169
- US-A1- 2012 274 063

## Description

### Technical field

The present disclosure belongs to the field of restraining connections for pipe couplings. The present subject-matter discloses a pipe coupling to apply in structures for laying and blocking pipes with a circular cross section. In particular, the pipe coupling of the present disclosure may be used to establish longitudinally force-locked connections with PVC or PE pipes.

### Background

The present disclosure is in the field of restraining connections for locking pipe couplings, in particular PVC or PE pipes.

There are documents disclosing devices with the purpose of blocking longitudinally cylindrical PVC or PE pipes, but these do not have independent restraining and sealing. For example, in document CN205331550 the structure of the valve has longitudinal thread holes for tightening with bolts which compress the same sealing member for both restraining and sealing. Furthermore, these coupling devices are not resistant to transverse forces or misalignment stress. Document WO2008/010030A1 discloses another type of restraining pipe coupling.

These facts are disclosed in order to illustrate the technical problem addressed by the present disclosure.

### General Description

The invention is a retraining pipe coupling according to the technical features of claim 1. Advantageous embodiments of the invention are defined in the dependent claims. The disclosure comprises a pipe coupling suitable for connecting pipes. This structure can be a gate valve, a "T" socket, a socket bend, a fixation flange among others. The pipe coupling is preferably made of cast iron. The pipe coupling contains two axial ends, one of them is turned to the structure to be coupled to the pipe and the other end is turned to the pipe to be coupled.

The pipe coupling comprises 3 sectors that are suitable to be tightened circumferentially between them with bolts and nuts using co-planar flaps to join the different sectors. These 3 sectors that are equal parts of a circle and when are together made a full circle that allows a better tightening around the pipe and enable the possibility of using a pipe with oval cross-section or a pipe with small variations in its circular section.

Each sector contains in both its ends flaps with holes to allow the tightening between the sectors. These flaps contain block bolts to fix the head of the bolt and facilitate the tightening. These referred block bolts can be a metal plate that is placed between the head of the bolt and the flap of the sector.

The present disclosure reveals a coupling device for connecting to a pipe wherein restraining and sealing are independently assured, the installation being simpler and easier.

The disclosed pipe coupling allows for shorter coupling arms, requiring shorter lengths, resulting in more compact pipe connections and pipe devices. The disclosed pipe coupling allows for an easier access to the fasteners for quicker and less encumbered work in location.

The disclosed pipe coupling also allows a degree of movement between restraining member and pipe sleeve such that small pipe misalignments can be tolerated while maintaining adequate grip. The restraining member is able to adjust by having a tolerance space between lip and rim. By having independent sealing and gripping elements, placed respectively in the pipe sleeve and restraining member, sealing will not be affected by this potential adjustment of the restraining member.

In an embodiment, the circumferential sectors are arranged to receive nuts and bolts for fastening the circumferential sectors around the pipe wherein said bolts are aligned circumferentially.

The disclosed pipe coupling allows for the fasteners to be supplied independently of the coupling, such that eroded fasteners can be fully and easily replaced, not requiring machining or rethreading of the pipe coupling.

In an embodiment, the circumferential sectors comprise perforated flaps arranged for receiving said nuts and bolts.

In an embodiment, each circumferential sectors comprises two flaps, each flap at an end of the respective circumferential sector, each of the flaps being coplanar with the contiguous flap of the neighbouring circumferential sector, for receiving said nuts and bolts.

In an embodiment, said one or more flaps comprise one or more bolt blockings for preventing a bolt or nut from rotating in order to facilitate the tightening of said nuts and bolts.

In an embodiment, the bolt blocking is a protruding rib in said one or more flaps.

In an embodiment, the first annular abutment surface is comprised of a circumferential protruding rim and the second annular abutment surfaces is comprised of a circumferential lip having a circumferential recess for receiving said rim.

An embodiment comprises said nuts and bolts for fastening circumferentially around the pipe the circumferential sectors.

In an embodiment, the grip ring is grooved, segmented or ridged for enhancing grip, in particular the grip ring is of brass.

The seal ring may be elastomeric, in particular polymeric, further in particular synthetic rubber, further in particular ethylene propylene diene monomer rubber, EPDM.

The nuts and bolts may be of stainless steel.

An embodiment comprises a removable stop tab inserted between two contiguous circumferential sectors of the restraining member for preventing said two contiguous circumferential sectors from clashing during transportation or mounting.

In an embodiment, the tab stop extends into a segment opening of the grip ring, such that grip ring is kept untightened in order to facilitate insertion of the pipe during mounting.

An embodiment comprises a removable elastomeric element between said first and second annular abutment surfaces for preventing said first and second annular abutment surfaces from clashing during transportation or mounting.

Gate valve, "T" socket, socket bend, or fixation flange comprising the restraining pipe coupling of the invention is also disclosed.

The pipe coupling contains one internal radial face which comprises a lip and a groove. The pipe coupling is connected to the pipe wherein the pipe coupling contains a previously referred groove to place a grip ring wherein this referred grip ring will be tight against de pipe and blocking him. This grip ring preferably has a conical shape that enables the accommodation in the groove grip which has to a conical shape. This previously referred grip ring contains one internal radial face with some irregularities look like teeth and when the pipe coupling is tightened these teeth bite the pipe that creates a longitudinal force-locked in the pipe.

The pipe coupling is connected to the structure. The referred structure has a rim in their end and the pipe coupling structure contains a lip in the face that is turned to the valve. This rim and this lip allow the connection of both structures. This referred connection allows a small slack that gives some freedom in small movements of the pipe and facilitate the installation of the pipe coupling.

The coupling contains a seal groove or recess to place a lip seal ring, this lip seal ring prevents leakage.

### Brief Description of the Drawings

The following figures provide preferred embodiments for illustrating the description and should not be seen as limiting the scope of invention, which is defined is the appended claims.
**Figure 1** illustrates an embodiment according to the present disclosure of a pipe coupling.
**Figure 2** illustrates in more detail an embodiment according to the present disclosure of a pipe coupling.

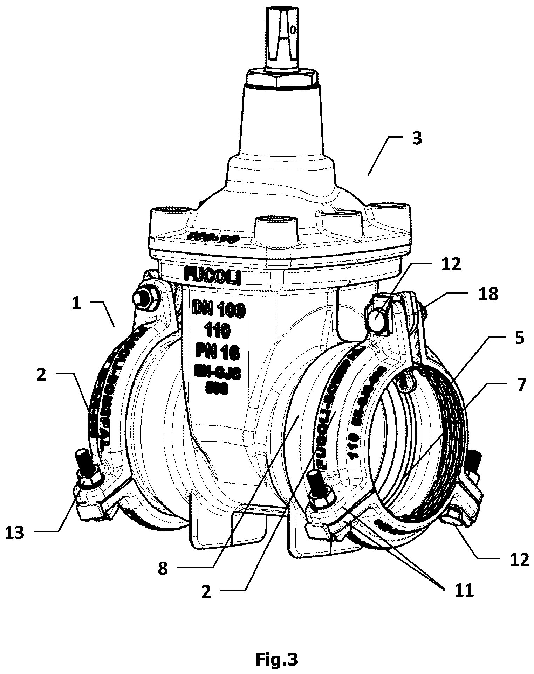

**Figure 3** illustrates an embodiment according to the present disclosure of a pipe coupling adapted to a gate valve.

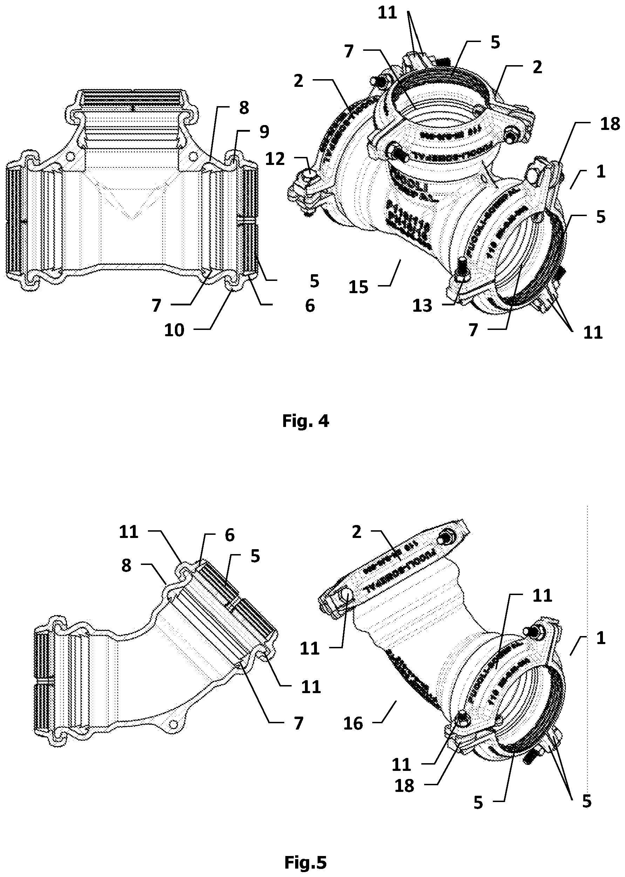

**Figure 4** illustrates an embodiment according to the present disclosure of a pipe coupling adapted to a 'T' socket.
**Figure 5** illustrates an embodiment according to the present disclosure of a pipe coupling adapted to a socket 45° bend.

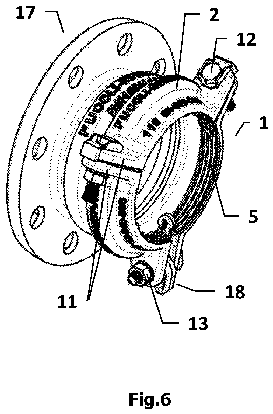

**Figure 6** illustrates an embodiment according to the present disclosure of a pipe coupling adapted on a flange.

### Detailed Description

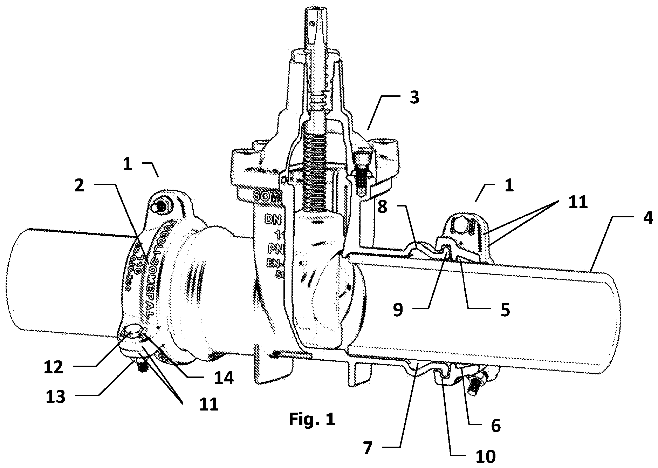

**Figure 1** illustrates an embodiment according to the present disclosure of a pipe coupling that comprises: pipe coupling (1); sectors of the pipe coupling (2); gate valve (3); pipe (4); grip ring (5); grip groove or recess (6); lip seal ring (7); seal groove or recess (8); rim (9); lip (10); flaps (11); bolts (12); nuts (13); bolt blockings (14).

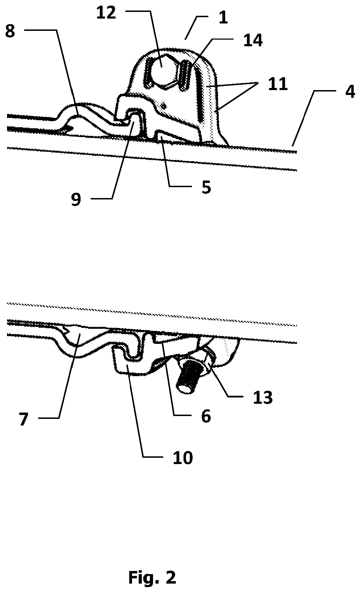

**Figure 2** illustrates in more detail an embodiment according to the present disclosure of a pipe coupling that comprises: pipe coupling (1); pipe (4); grip ring (5); grip groove or recess (6); lip seal ring (7); seal groove or recess (8); rim (9); lip (10); flaps (11); bolts (12); nuts (13); bolt blockings (14).

The present disclosure relates to a pipe coupling (1) to connect and fixate one pipe (4) in one structure like a gate valve (3), a socket tee (15), a socket bend (16), or a fixation flange (17), among others.

The present disclosure also relates to a pipe coupling (1) comprising three separable sectors (2) wherein each sector has two flaps (11). The flaps (11) of different sectors (2) are co-planar between them and their tight is ensured by bolts (12) and nuts (13) these flaps contain in the external face a bolt blockings (14) that is a plate with ribs to lock the bolt (12) and simplify the tightening between the sectors.

The present disclosure also relates to a pipe coupling (1) wherein the structure where the pipe coupling (1) will be fitted, a coupling sleeve, contains in its end or ends a rim (9) to prevent that the pipe coupling (1), or part of it, separates from the structure to be coupled to.

The present disclosure also relates to a pipe coupling (1) that comprises in the internal radial face of the coupling sleeve a grip groove or recess (6) and in the internal radial face of the restraining member a lip (10), wherein the grip groove or recess (6) is the accommodation of a grip ring (5) and the lip (10) is the accommodation to fit in a rim (9) of the coupling sleeve. The pipe coupling is connected with the structure due the fitting between the lip (9) and the rim (8), and the grip ring (5) creates a longitudinal force-locked in the pipe (4).

In an embodiment, the structure where the pipe (4) is fitted comprises a coupling sleeve having a seal groove (8) for housing the lip seals (7) that prevent the leakage.

In an embodiment, the pipe coupling (1) can be adapted in different structures like a gate valve (3), a "T" socket (15), a socket bend (16), or a fixation flange (17), among others.

In an embodiment, a stop tab (18) is included between two contiguous circumferential sectors of the restraining member such that these do not clash during transportation or mounting. The stop tab (18) can be removed at the appropriate mounting stage, preferably before the tightening of the circumferential sectors of the restraining member together against and around the pipe.

Preferably the tab stop (18) extends into a segment opening of the grip ring, such that grip ring is kept more open in order to facilitate insertion of the pipe during mounting.

## Claims

1. Restraining pipe coupling (1) for connecting to a pipe (4), comprising:
a coupling sleeve for receiving an end of the pipe to be restrained and having a first annular abutment surface;
a restraining member for surrounding the pipe and having a second annular abutment surface;
a grip ring (5) for gripping the pipe, comprised in a recess (6) of the restraining member for facing the pipe;
a seal ring (7) for sealing between the coupling sleeve and the pipe, comprised in a recess (8) of the coupling sleeve for facing the pipe;
wherein the restraining member is comprised of three circumferential sectors (2) for tightening together against and around the pipe;
wherein the first and second annular abutment surfaces are arranged to overlap in a radial direction such that the first and second annular abutment surfaces engage to interlock the coupling sleeve and the restraining member together;
wherein the restraining member and the coupling sleeve are of cast iron; **characterized in that** the first and second annular abutment surfaces are comprised of a protruding rim (9) and a lip (10) having a recess for receiving said rim such that they engage to interlock the coupling sleeve and the restraining member together and **in that** the rim and the lip have a tolerance space allowing adjustment of the restraining member to pipe misalignment or transversal efforts.

2. Restraining pipe coupling for connecting to a pipe according to the previous claim, wherein the circumferential sectors are arranged to receive nuts (13) and bolts (12) for fastening the circumferential sectors around the pipe wherein said bolts are aligned circumferentially.

3. Restraining pipe coupling for connecting to a pipe according to the previous claim, wherein the circumferential sectors comprise perforated flaps (11) arranged for receiving said nuts and bolts.

4. Restraining pipe coupling for connecting to a pipe according to the previous claim, wherein each circumferential sectors comprises two flaps, each flap at an end of the respective circumferential sector, each of the flaps being coplanar with the contiguous flap of the neighbouring circumferential sector, for receiving said nuts and bolts.

5. Restraining pipe coupling for connecting to a pipe according to the previous claim, wherein said one or more flaps comprise one or more bolt blockings for preventing a bolt or nut from rotating in order to facilitate the tightening of said nuts and bolts.

6. Restraining pipe coupling for connecting to a pipe according to the previous claim, wherein the bolt blocking is a protruding rib in said one or more flaps.

7. Restraining pipe coupling for connecting to a pipe according to the previous claim, wherein the first annular abutment surface is comprised of a circumferential protruding rim and the second annular abutment surfaces is comprised of a circumferential lip having a circumferential recess for receiving said rim.

8. Restraining pipe coupling for connecting to a pipe according to any of the previous claims, comprising said nuts and bolts for fastening circumferentially around the pipe the circumferential sectors.

9. Restraining pipe coupling for connecting to a pipe according to any of the previous claims, wherein the grip ring is grooved, segmented or ridged for enhancing grip, in particular the grip ring is of brass.

10. Restraining pipe coupling for connecting to a pipe according to any of the previous claims, comprising a removable stop tab (18) inserted between two contiguous circumferential sectors of the restraining member for preventing said two contiguous circumferential sectors from clashing during transportation or mounting.

11. Restraining pipe coupling for connecting to a pipe according to the previous claim, wherein the tab stop extends into a segment opening of the grip ring, such that grip ring is kept untightened in order to facilitate insertion of the pipe during mounting.

12. Restraining pipe coupling for connecting to a pipe according to any of the previous claims, comprising a removable elastomeric element between said first and second annular abutment surfaces for preventing said first and second annular abutment surfaces from clashing during transportation or mounting.

13. Restraining pipe coupling for connecting to a pipe according to any of the previous claims, wherein the grip ring and the recess of the restraining member for receiving the grip ring have a conical shape such that an axial pipe traction effort results in a strengthening of the gripping of the grip member.

14. Gate valve (3), "T" socket (15), socket bend(16), or fixation flange (17) comprising the restraining pipe coupling (1) of any of the previous claims.

## Patentansprüche

1. Zugfeste Rohrkupplung (1) zur Verbindung mit einem Rohr (4), umfassend:
eine Kupplungsmuffe zur Aufnahme eines Endes des zu befestigenden Rohrs, die eine erste ringförmige Anlagefläche aufweist;
ein Rückhalteelement, zum Umfassen des Rohres mit einer zweiten ringförmigen Anlagefläche;
einen Klemmring (5) zum Einspannen des Rohrs, der sich in einer dem Rohr zugewandten Aussparung (6) des Rückhalteelements befindet;
einen Dichtring (7) als Dichtung zwischen der Kupplungsmuffe und dem Rohr, der sich in einer dem Rohr zugewandten Aussparung (8) der Kupplungsmuffe befindet;
wobei das Rückhalteelement aus drei umlaufenden Segmenten (2) besteht, die zusammen gegen das Rohr und um dieses herum gespannt werden;
wobei die erste und die zweite ringförmige Anlagefläche so angeordnet sind, dass sie sich in einer radialen Richtung überlappen, sodass die erste und die zweite ringförmige Anlagefläche ineinander greifen, um die Kupplungsmuffe und das Rückhalteelement miteinander zu verriegeln;
wobei das Rückhalteelement und die Kupplungsmuffe aus Gusseisen bestehen;
**dadurch gekennzeichnet, dass** die erste und die zweite ringförmige Anlagefläche aus einem vorstehenden Rand (9) und einer Lippe (10) bestehen, die eine Aussparung zur Aufnahme des genannten Rands aufweist, sodass diese ineinander greifen, um die Kupplungsmuffe und das Rückhalteelement miteinander zu verriegeln, wobei der Rand und die Lippe einen Toleranzbereich aufweisen, der es ermöglicht, das Rückhalteelement an eine Fehlausrichtung des Rohrs oder an Transversalkräfte anzupassen.

2. Zugfeste Rohrkupplung zur Verbindung mit einem Rohr nach dem vorangehenden Anspruch, wobei die umlaufenden Segmente so angeordnet sind, dass Muttern (13) und Bolzen (12) zur Befestigung der um das Rohr umlaufenden Segmente eingeführt werden können, wobei die Bolzen in Umlaufrichtung ausgerichtet sind.

3. Zugfeste Rohrkupplung zur Verbindung mit einem Rohr nach dem vorangehenden Anspruch, wobei die umlaufenden Segmente gelochte Laschen (11) aufweisen, die so angeordnet sind, um die genannten Muttern und Bolzen aufzunehmen.

4. Zugfeste Rohrkupplung zur Verbindung mit einem Rohr nach dem vorangehenden Anspruch, wobei jedes umlaufende Segment zwei Laschen umfasst, wobei sich jede Lasche an einem Ende des jeweiligen umlaufenden Segments befindet, wobei jede der Laschen auf der gleichen Ebene mit der angrenzenden Lasche des benachbarten umlaufenden Segments liegt, um die Muttern und Bolzen aufzunehmen.

5. Zugfeste Rohrkupplung zur Verbindung mit einem Rohr nach dem vorangehenden Anspruch, wobei eine oder mehrere der genannten Laschen eine oder mehrere Bolzensperrglieder umfassen, um zu verhindern, dass sich ein Bolzen oder eine Mutter dreht, um das Anziehen der Muttern und Bolzen zu erleichtern.

6. Zugfeste Rohrkupplung zur Verbindung mit einem Rohr nach dem vorangehenden Anspruch, wobei das Bolzensperrglied eine vorstehende Rippe in einer oder mehrerer der genannten Laschen ist.

7. Zugfeste Rohrkupplung zur Verbindung mit einem Rohr nach dem vorangehenden Anspruch, wobei die erste ringförmige Anlagefläche aus einem umlaufenden vorstehenden Rand besteht und die zweite ringförmige Anlagefläche aus einer umlaufenden Lippe besteht, die eine umlaufende Aussparung aufweist, um den genannten Rand aufzunehmen.

8. Zugfeste Rohrkupplung zur Verbindung mit einem Rohr nach einem der vorangehenden Ansprüche, umfassend die genannten Muttern und Bolzen, um die um das Rohr umlaufenden Segmente umlaufend zu befestigen.

9. Zugfeste Rohrkupplung zur Verbindung mit einem Rohr nach einem der vorangehenden Ansprüche, wobei der Klemmring zur Haftungsverbesserung gerillt, segmentiert oder geriffelt ist, wobei der Klemmring insbesondere aus Messing besteht.

10. Zugfeste Rohrkupplung zur Verbindung mit einem Rohr nach einem der vorangehenden Ansprüche, umfassend eine abnehmbare Anschlaglasche (18), die zwischen zwei angrenzenden umlaufenden Segmenten des Rückhalteelements eingesetzt ist, um zu verhindern, dass die beiden genannten angrenzenden umlaufenden Segmente während des Transports oder der Montage aneinanderstoßen.

11. Zugfeste Rohrkupplung zur Verbindung mit einem Rohr nach dem vorangehenden Anspruch, wobei die Anschlaglasche in eine Öffnung des Segments des Klemmrings reicht, um zu verhindern, dass der Klemmring gespannt wird, um das Einführen des Rohrs während der Montage zu erleichtern.

12. Zugfeste Rohrkupplung zur Verbindung mit einem Rohr nach einem der vorangehenden Ansprüche, umfassend ein abnehmbares elastomeres Element zwischen der genannten ersten und zweiten ringförmigen Anlagefläche, um zu verhindern, dass die genannte erste und zweite ringförmige Anlagefläche während des Transports oder der Montage aneinanderstoßen.

13. Zugfeste Rohrkupplung zur Verbindung mit einem Rohr nach einem der vorangehenden Ansprüche, wobei der Klemmring und die Aussparung des Rückhalteelements zur Aufnahme des Klemmrings eine konische Form aufweisen, sodass eine axiale Belastung des Rohrs zu einer Verstärkung der Spannkraft des Klemmelements führt.

14. Absperrschieber (3), T-Muffe (15), Muffenbogen (16) oder Befestigungsflansch (17) mit der Zugfeste Rohrkupplung (1) nach einem der vorangehenden Ansprüchen.

## Revendications

1. Raccord de tuyaux de retenue (1) pour raccorder à un tuyau (4), comprenant :
un manchon de raccordement pour recevoir une extrémité du tuyau devant être retenu et ayant une première surface de butée annulaire ;
un élément de retenue pour entourer le tuyau et ayant une seconde surface de butée annulaire ;
un anneau de serrage (5) pour serrer le tuyau, compris dans un renfoncement (6) de l'élément de retenue pour faire face au tuyau ;
un anneau d'étanchéité (7) pour sceller entre le manchon de raccordement et le tuyau, compris dans un renfoncement (8) du manchon de raccordement pour faire face au tuyau ;
dans lequel l'élément de retenue est composé de trois secteurs circonférentiels (2) qui se serrent ensemble contre et autour du tuyau ;
dans lequel les première et seconde surfaces de butée annulaires sont arrangées pour se superposer dans une direction radiale telle que les première et seconde surfaces de butée annulaires s'engagent pour verrouiller le manchon de raccordement et l'élément de retenue ensemble ;
dans lequel l'élément de retenue et le manchon de raccordement sont en fonte ;
**caractérisé en ce que** les première et seconde surfaces de butée annulaires sont composées d'un rebord saillant (9) et d'une lèvre (10) ayant un renfoncement pour recevoir ledit rebord tel qu'ils s'engagent pour verrouiller le manchon de raccordement et l'élément de retenue ensemble et où le rebord et la lèvre ont un espace de tolérance permettant un ajustement de l'élément de retenue au désalignement du tuyau ou aux efforts transversaux.

2. Raccord de tuyaux de retenue pour raccorder à un tuyau selon la revendication précénte, dans lequel les secteurs circonférentiels sont arrangés pour recevoir des écrous (13) et vis (12) pour fixer les secteurs circonférentiels autour du tuyau dans lequel lesdites vis sont alignées de manière circonférentielle.

3. Raccord de tuyaux de retenue pour raccorder à un tuyau selon la revendication précédente, dans lequel les secteurs circonférentiels comprennent des rabats perforés (11) arrangés pour recevoir lesdits écrous et vis.

4. Raccord de tuyaux de retenue pour raccorder à un tuyau selon la revendication précédente, dans lequel chaque secteur circonférentiel comprend deux rabats, chaque rabat à une extrémité du secteur circonférentiel respectif, chacun des rabats étant coplanaire avec le rabat contigu du secteur circonférentiel voisin, pour recevoir lesdits écrous et vis.

5. Raccord de tuyaux de retenue pour raccorder à un tuyau selon la revendication précédente, dans lequel ledit ou lesdits rabats comprennent un ou plusieurs blocages de vis pour éviter qu'une vis ou qu'un écrou ne pivote afin de faciliter le serrage desdits écrous et vis.

6. Raccord de tuyaux de retenue pour raccorder à un tuyau selon la revendication précédente, dans lequel le blocage de vis est une nervure en saillie dans ledit ou lesdits rabats.

7. Raccord de tuyaux de retenue pour raccorder à un tuyau selon la revendication précédente, dans lequel la première surface de butée annulaire est composée d'un rebord saillant circonférentiel et la seconde surface de butée annulaire est composée d'une lèvre circonférentielle ayant un renfoncement circonférentiel pour recevoir ledit rebord.

8. Raccord de tuyaux de retenue pour raccorder à un tuyau selon l'une quelconque des revendications précédentes, comprenant lesdits écrous et vis pour fixer de manière circonférentielle autour du tuyau les secteurs circonférentiels.

9. Raccord de tuyaux de retenue pour raccorder à un tuyau selon l'une quelconque des revendications précédentes, dans lequel l'anneau de serrage est rainuré, segmenté ou strié pour augmenter le serrage, en particulier l'anneau de serrage étant en laiton.

10. Raccord de tuyaux de retenue pour raccorder à un tuyau selon l'une quelconque des revendications précédentes, comprenant une languette d'arrêt (18) insérée entre deux secteurs circonférentiels contigus de l'élément de retenue pour éviter que les deux secteurs circonférentiels contigus ne se cognent l'un contre l'autre durant le transport ou le montage.

11. Raccord de tuyaux de retenue pour raccorder à un tuyau selon la revendication précédente, dans lequel la languette d'arrêt se prolonge par une ouverture de segment de l'anneau de serrage, tel que l'anneau de serrage reste dévissé afin de faciliter l'insertion du tuyau durant le montage.

12. Raccord de tuyaux de retenue pour raccorder à un tuyau selon l'une quelconque des revendications précédentes, comprenant un élément élastomère amovible entre lesdites première et seconde surfaces de butée annulaires pour éviter que lesdites première et seconde surfaces de butée annulaires ne se cognent l'une contre l'autre durant le transport ou le montage.

13. Raccord de tuyaux de retenue pour raccorder à un tuyau selon l'une quelconque des revendications précédentes, dans lequel l'anneau de serrage et le renfoncement de l'élément de retenue pour recevoir l'anneau de serrage ont une forme conique telle qu'un effort de traction de tuyau axial résulte en un renforcement du serrage de l'élément de serrage.

14. Robinet vanne (3), prise « T » (15), coude (16), ou bride de fixation (17) comprenant le raccord de tuyaux de retenue (1) de l'une quelconque des revendications précédentes.
